# EUROPEAN PATENT SPECIFICATION

(11) **EP 1 656 822 B1**
(45) Date of publication and mention of the grant of the patent: **14.01.2009**
(21) Application number: 05024808.7
(22) Date of filing: 14.11.2005
(51) Int. Cl.: A01C 23/00

(54) **Distributor unit for distribution of a liquid such as slurry for a slurry spreader to several outlets, and a method**
Verteilereinheit und Verfahren zum Verteilen von Flüssigkeiten wie Gülle in die Auslässe von einem Güllenverteiler
Distributeur et méthode pour la distribution de substances liquides telles que du lisier aux sorties d'un épandeur de lisier

(30) Priority: 12.11.2004 DK 200401755
(43) Date of publication of application: 17.05.2006
(73) Proprietor: Sørensen, Harry Højvang, 6818 Årre (DK)
(72) Inventor: Sørensen, Harry Højvang, 6818 Årre (DK)
(74) Representative: Holme, Edvard

(56) References cited:
- EP-A- 0 638 227
- EP-A- 0 931 442
- DE-U1- 8 910 777
- DE-U1- 20 308 082

## Description

### Background of the invention

The invention relates to a distributor unit for the distribution of a liquid such as slurry from a container in a slurry spreader to several outlets according to the preamble to claim 1, also a method.

Slurry is a mixture of excrement and urine from cows and pigs, but unlike liquid manure it does not contain straw. In order to be able to bring the slurry out on the field, it is necessary for the slurry to be stirred around in the farm's container so that it assumes a uniform flowing consistency.

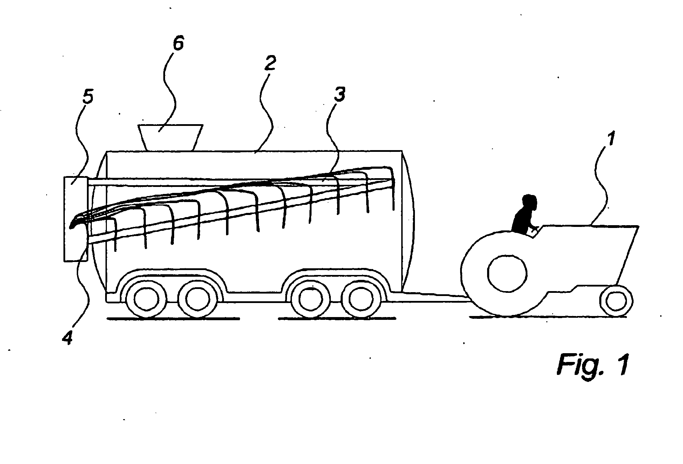

Figure 1 shows an example of a known slurry spreader with a drag-pipe system on a spreader boom, where the drag-pipes spread the slurry on the field through the pipes at a distance of 30-35 cm which drag on the surface of the earth.

From Danish patent 170 545 B1 (EP-A-0 638 227) there is known an example of a known slurry spreader with a distributor which divides down and distributes the slurry to the individual drag-pipes. The distributor comprises a baffle plate with a number of outlet holes to the pipes, where the holes are placed symmetrically around a circular centre. A baffle ring which rotates eccentrically over the baffle plate and alternately closes or opens for a flow of slurry of a given strength to the outlet holes and therewith the pipes.

With the spreading of slurry with drag-pipes, where the distribution out to the individual pipes takes place by means of such a distributor, it can be a problem to dose correctly when the amounts of slurry vary a great deal. The driving speed for the slurry spreader can not always be adjusted to the amount of slurry, and the pressure in the distributor changes with large and small amounts of slurry per minute. This can affect the accuracy of the distribution when use is made of holes of the same size. Another problem can arise when the speed is changed, whereby a reduction in the amount of slurry can be necessary.

Therefore, during operation it will often be advantageous and desirable to be able to change the amount of slurry more than by merely opening and closing for the flow of slurry.

In order to achieve this object, previous practice has been to reduce the hole sizes by changing the hole plates. This, however, is troublesome with most of the distributors, and can not be undertaken during operation.

A second possibility of changing the amount of slurry is that of turning the holes in the baffle plate partly away from the outlets, as is known from German utility model no. DE 20 3 08 082 U1. Since in this manner the holes become blocked after the knives, the possibility of blockage arises and it is herewith an unreliable manner in which to change the slurry amount.

The object of the invention is to create a distributor and a method for a liquid such as slurry, where the amount of liquid can be controlled in an expedient, reliable and simple manner.

### The invention

As mentioned, the invention relates to a distributor unit according to the preamble to claim 1, and which is characteristic in that said unit further contains means of changing the distribution point from a first distribution point to a second distribution point by a changing of the direction of rotation of said motor according to the characterizing portion of claim 1.

It is hereby possible to control the amount of liquid in an advantageous and expedient manner by changing the direction of the drive motor, which can be effected safely and simply during operation.

It should be emphasised that the outlet holes may positioned in other formations than on a circular periphery e.g. in an oval formation.

With one aspect of the invention, the axle connection is connected to the baffle ring via an eccentric which is placed eccentrically in relation to the centre of the baffle unit.

With a second aspect of the invention, said end-stop and the protrusion define the positions for said first and second connection points.

With a third aspect of the invention, said end-stop is an adjustable end-stop, e.g. two pins which can be inserted down in several openings arranged along the opening in the baffle ring or on the outer part of the eccentric in relation to the inner part of the eccentric.

It is hereby further possible to adjust the amount of slurry which flows through the distributor unit by changing the extent to which the area of the outlet holes is uncovered or covered with the baffle ring.

With a fourth aspect of the invention, said end-stop is only an end-stop with a certain extent between two contact surfaces for the recess.

With a single end-stop it is hereby possible to create two contact surfaces for the protrusion, and herewith change the swing-out movement of the eccentric by changing the direction of rotation of the drive motor.

With a fifth aspect of the invention, the openings for said adjustable stop are placed around the eccentric within a circle of 180 degrees.

With a sixth aspect of the invention, the eccentric is placed double eccentrically in the distributor unit at different directions of rotations for the motor such as by the said first connection point is displaced a distance R₁ in relation to the centre of said circle periphery at a first direction of rotation, and the second connection point is displaced a distance R₂ at the opposite direction of rotation.

"Double eccentrically" means should be understood as an apparatus comprising a drive shaft positioned eccentrically in a first unit; the first unit being eccentrically positioned in a further unit.

With small distances from a first connection point to a second connection point, it is ensured that the mechanical forces by a change are limited, and that the unit is not hereby loaded unnecessarily.

### The drawings

In the following, the invention will be described with reference to the drawings, where
- fig. 1: schematically shows a slurry spreader with drag-pipe system on a spreading boom,
- fig. 2: schematically shows a known distributor unit,
- fig. 3: shows the construction of the distributor unit from fig. 2 seen in perspective,
- figs. 4a and 4b: both schematically show a section of a distributor unit with an eccentric swinging-out movement according to the invention,
- fig. 5: shows a preferred embodiment of an eccentric unit with eccentric swinging-out movement according to the invention,
- figs. 6a and 6b: show eccentric positions by different of directions of rotation for the eccentric unit from fig. 5,
- fig. 7: shows the mode of operation of an eccentric unit according to the invention,
- fig. 8a: shows the same position for a first embodiment of a distributor unit according to the invention at both directions of rotations,
- fig. 8b: shows the same position for a second embodiment of a distributor unit according to the invention at both directions of rotation, and
- fig. 9: shows a distributor unit with more than one baffle ring.

### Detailed description

Figure 1 shows a slurry spreader 2 with a carriage and slurry container which is pulled by a tractor 1 or a similar vehicle. A number of drag-pipes 4 are mounted on a two-part spreader boom 3, where all of the pipes are connected to a distributor unit 5 which is supplied with slurry from the slurry container by means of a not-shown pump.

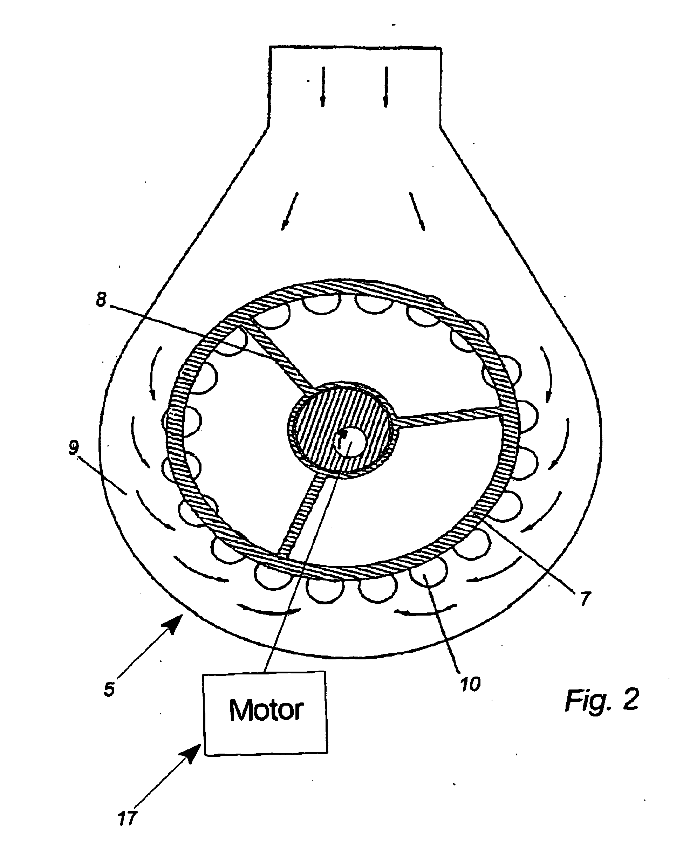

Fig. 2 schematically shows a known embodiment of the distributor unit 5 in a housing with an inlet 9 for the slurry outside a baffle ring 7. Inside the baffle ring 7 there is created a chamber to which air is supplied.

The baffle ring 7 is connected to a hydraulic or electrically-driven motor m via a crankshaft, and can hereby be driven to rotate in relation to a number of outlet holes 10, where the holes on the underside have stub connections (not shown) to the drag-pipes 4.

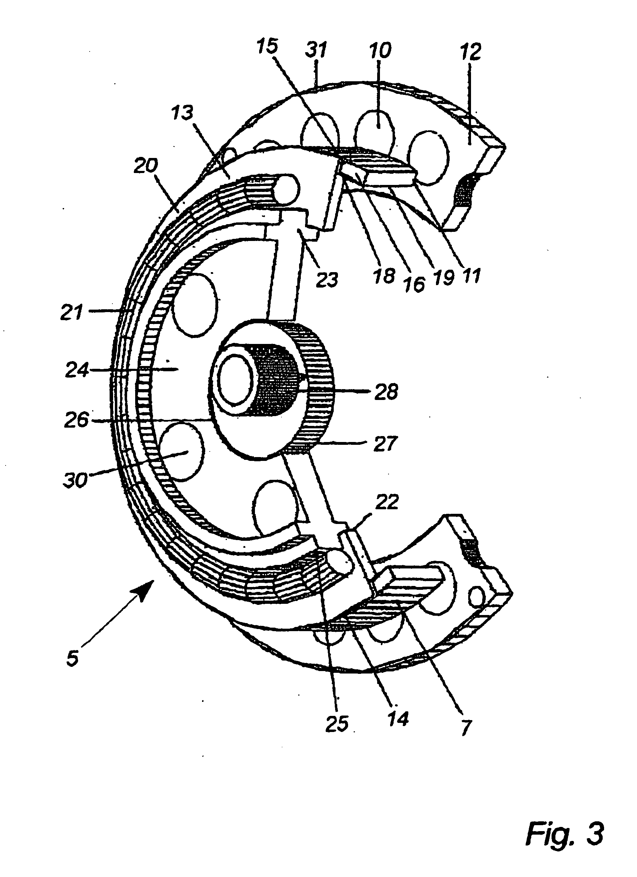

Fig. 3 shows the construction of the distributor unit in several details and seen in perspective.

A baffle plate 12 is provided with the above-mentioned outlet holes 10 for slurry, where the holes are preferably of the same diameter and are arranged at a certain mutual distance. The number of holes 10 corresponds to the number of drag-pipes 4.

Over the baffle plate 12 there is mounted a baffle ring 7 which has a plane underside 11 and can be displaced on the baffle ring's upper side 12, which is similarly plane. On top of the baffle ring 7 there is mounted a piston 13 in the form of a cylinder ring which, along the external edge 14 on the underside, is configured with a recess or a track with a horizontal surface 15, which lies up against a plane upper side on the baffle ring 7, and with a vertical surface 18 which lies up against the inside, vertical edge 19 on the baffle ring 7. The upper side of the piston 13 is influenced by a downwardly-directed spring force, for example from an O-ring 21, whereby the baffle ring 7 presses down against the baffle plate 12. The inside edge 22 on the piston 13 is in loose engagement with the external side of an annular rib 23, which is mounted on the underside of a circular plate 24 a distance behind the outermost edge 25 of said plate. At the centre the plate 24 has a circular cut-out 26 in which an eccentric 27 on the shaft 28 can be accommodated.

The circular plate 24 is configured with a number of air holes 30.

When the shaft 28 is rotated by the motor, the baffle ring 7 will open and close for the supply of slurry from the outside to all of the outlet holes 10. Moreover, air is led from the inside to all of the outlet holes, so that atmospheric pressure prevails in the uppermost part of the pipes 4. As a consequence hereof, a pipe 4 will be emptied of slurry even though the supply of slurry through the associated outlet hole 10 is blocked.

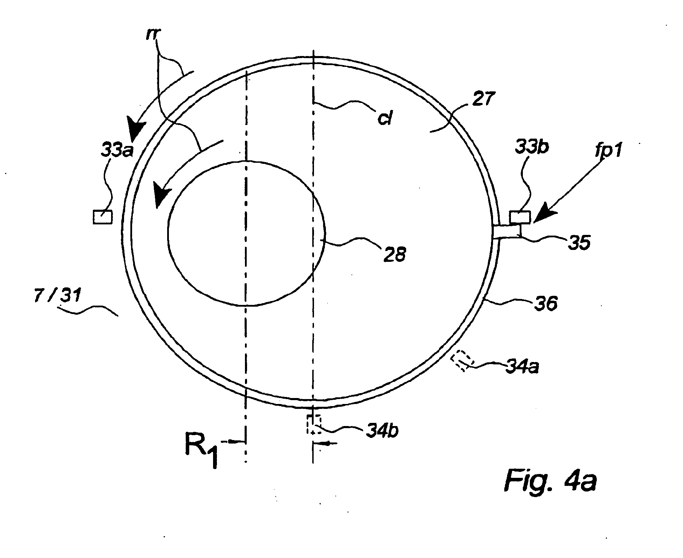

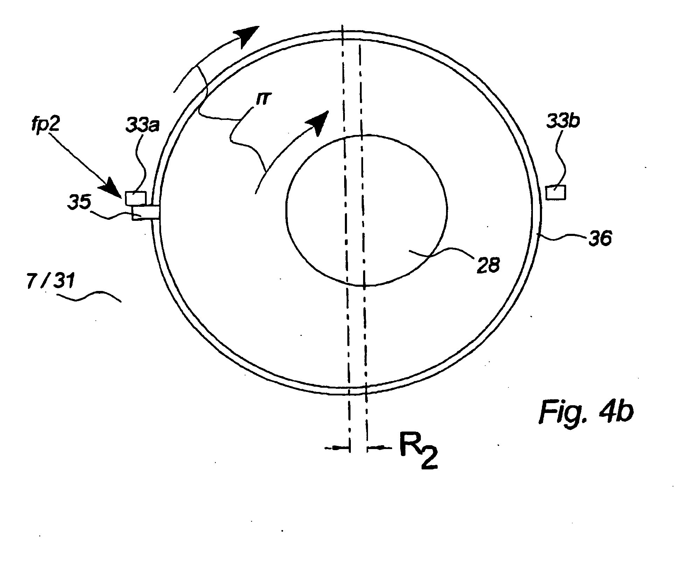

Figs. 4a and 4b both schematically show parts of a distributor unit with an eccentric swinging-out movement according to the invention.

The section comprises the shaft 28 which is secured to the eccentric 27 by a fixed connection, where both are placed in an opening in the baffle unit 31/baffle ring 7 (not shown on the figure). Between the baffle unit 31/baffle ring 7 and the eccentric 27 there is placed a bearing 36 which allows the baffle unit 31/baffle ring 7 and the eccentric 27 to move in relation to each other. The bearing 36 can, for example, be a ball bearing, roller or slide bearing. The eccentric 27 has contact with the baffle unit via a protrusion 35 which lies up against one of two end-stops 33a, 33b which are placed on the baffle unit 31 around the opening in which the eccentric lies. The end-stops 33a, 33b and the protrusion 35 hereby define the positions for a first and second connection point fp1, fp2 between the baffle unit 31 and the eccentric 27.

In a special embodiment, the end-stops are pins which can be inserted down into holes 34a, 34b in the baffle unit 31, where these are placed at a suitable distance. Two of the holes are preferably placed on each their side of the eccentric corresponding to a separation of 180 degrees, hereby achieving the greatest alteration in the eccentric swinging-out movement providing that the centre c for the circle periphery 32 and the outlet holes 10 do not lie between the two end-stops 33a, 33b.

Fig. 4a shows a first example with a section of a distributor unit e.g. during operation, where a greater distance R₁ is assumed with an anticlockwise direction of rotation rr. With the direction of rotation, the protrusion 35 is pressed forward against the end-stop 33b, after which the baffle unit 31 will be forced to rotate (and the baffle ring 7 will move or even rotate) and, due to the distance R₁, with an eccentric movement in relation to the outlet holes 10.

The figure also shows that the pins can be placed with less than a 180 degrees separation, e.g. with 45, 90 and 135 degrees separation. It is hereby possible for the amount of slurry which flows through the distributor unit 5 to be changed to desired amounts.

Fig. 4b shows a second example with a section of a distributor unit e.g. during operation, where a smaller distance R₂ is assumed with a clockwise direction of rotation rr. With the direction of rotation, the protrusion 35 is pressed forward against the end-stop 33a, after which the baffle unit 31 Will be forced to rotate (and the baffle ring 7 will move or even rotate) and, due to the distance R₂, with an eccentric movement in relation to the outlet holes 10.

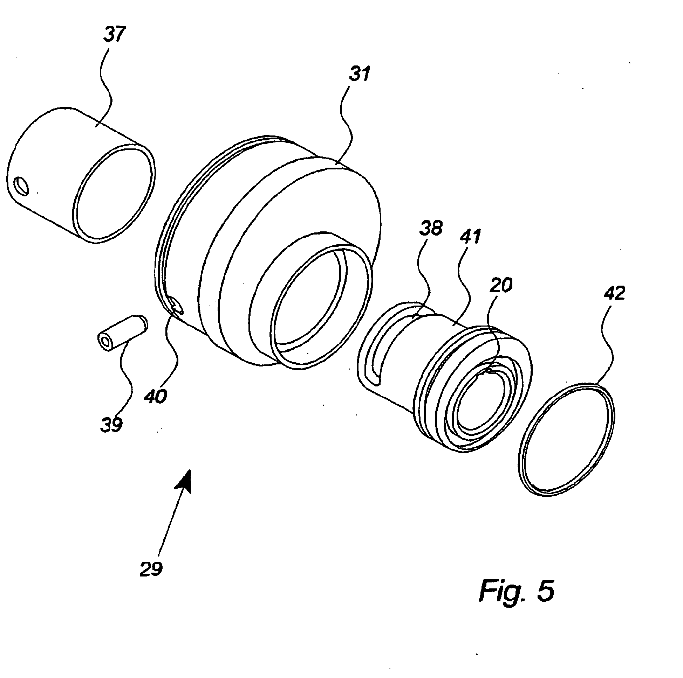

Fig. 5 shows a preferred embodiment of an eccentric unit 29 for a distributor unit 5 with eccentric swinging-out movement according to the invention. The eccentric unit is connected directly or indirectly to the baffle ring 7 (not shown on the figure).

The eccentric unit 29 consists of baffle unit 31 with a bore for a lining 37 where the lining can contain an eccentric 41.

The eccentric 41 has a bore for incorporation of a motor shaft 28 (not shown on this figure) by means of a groove 20 for securing with a key to said shaft.

Likewise, the eccentric 41 is in a part its circumference provided with a groove 38 for uptake of a control pin 39. The control pin 39 is led through a hole 40 in the baffle unit 31 and corresponding hole in the lining where after its tip engage with said groove 38.

In order to seal the eccentric unit against fluid penetration this can further be provided with an O-ring 42 between the eccentric 41 and the lining 37/baffle unit 31.

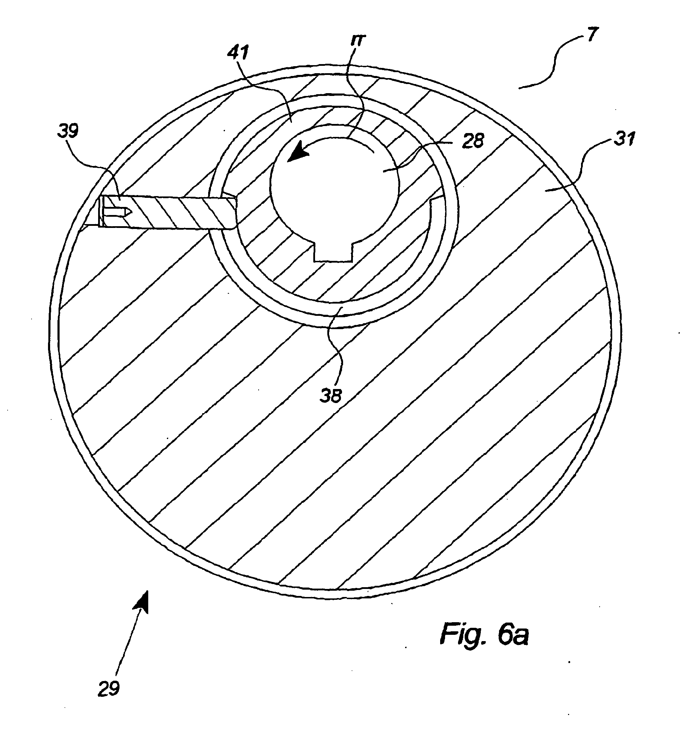

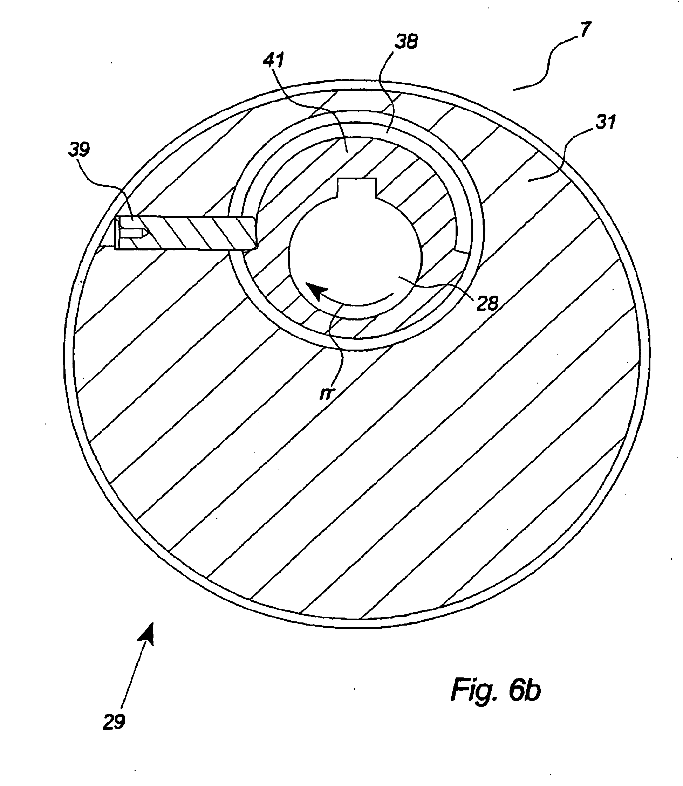

Figs. 6a and 6b show positions of the eccentric at different directions of rotations for the motor and the eccentric unit from fig. 5.

Fig. 6a shows a sectional view of the eccentric unit where the cut is made at the control pin 39. The figure shows the eccentric unit 29 with a first direction of rotation for the motor and its shaft where the direction of rotation is indicated with the arrow rr. By this direction of rotation, the eccentric 41 will turn alone until the control pin 39 reaches the one end of said groove 38. Here a first connection point fp1 will be created between the baffle ring and the eccentric through the control pin 39 and when the connection is made, the baffle unit 31 will rotate together with the eccentric 41.

As shown in the figure, the eccentric 41 is circular with a bore for the motor shaft 28, where the bore for the motor shaft is displaced at a distance in relation to the centre of the of the eccentric. It is hereby ensured that the eccentric moves with an eccentric movement when the motor rotates this, where the eccentric will move over a circular area with a larger diameter than the eccentric itself.

Likewise, it is shown that the eccentric 41 is placed in a bore for the circular baffle unit 31, where the bore is displaced at a distance in relation to the centre for the baffle unit 31.

Fig. 6b shows the eccentric unit 29 from fig. 6a but where the direction of rotation for the motor is changed so that the shaft 28 rotates in the opposite direction. The opposite direction of rotation is indicated with the arrow rr.

By this direction of rotation, the eccentric 41 will turn alone until the control pin 39 reaches the other end of said groove 38. Here a second connection point fp2 will be created between the baffle ring and the eccentric through the control pin 39 and when the connection is made, the baffle unit 31 will rotate together with the eccentric 41.

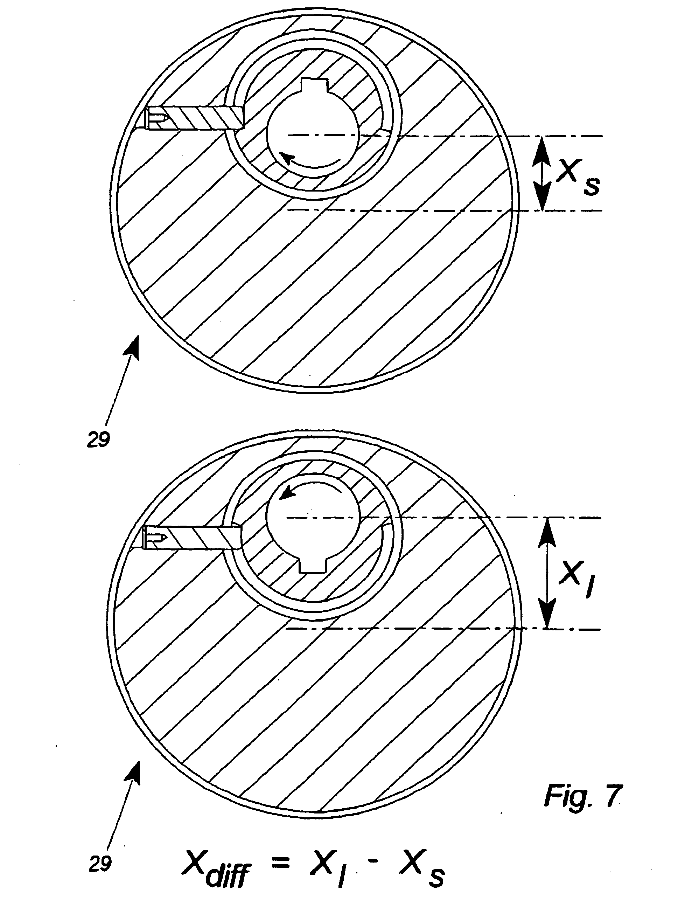

Fig. 7 shows the mode of operation of an eccentric unit according to the invention.

By the construction of the eccentric unit as shown on figures 6a and 6b the battle unit 31 will move eccentrically with the resulting eccentric displacement of the centre of the motor shaft in relation to the centre of the baffle unit (shown as X₅ and X₁).

This means a first eccentric movement with a first distance between the motor shaft and the centre of the baffle unit at the direction of rotation which presses against at connection point fp1 (shown on figure 6a and at the bottom of figure 7). And another eccentric movement with another distance between the motor shaft and the centre of the baffle unit at the opposite direction of rotation which supports at the connection point fp2 (shown on figure 6b and at the top of figure 7).

The circular area which the baffle unit moves across will hereby have a larger radius at when it is pressed against the connection point fp2 than at connection point fp1.

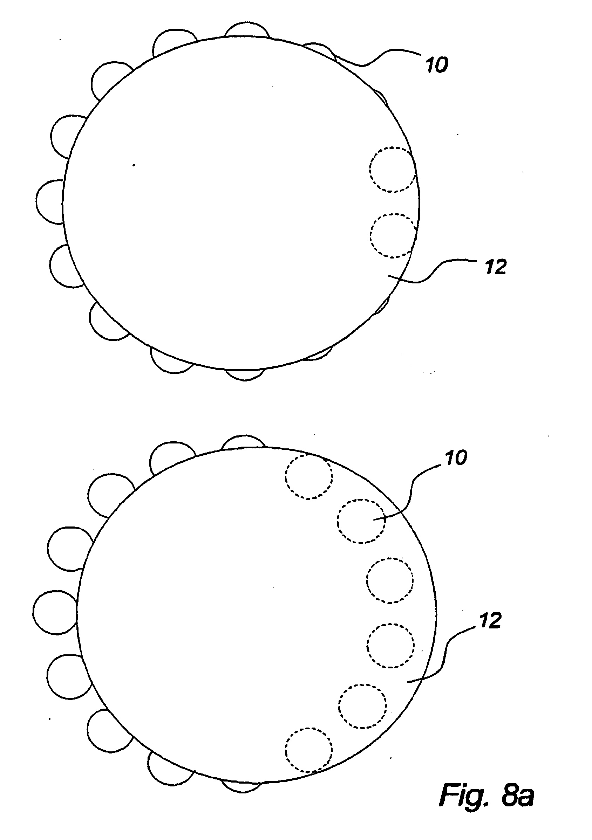

Fig. 8a shows the functionality for the distributor unit at the same position and for both directions of rotation.

As shown at the top drawing of figure 8a, the circular area which the baffle unit moves across will be smaller at a direction of rotation (corresponding to the shown situation in figure 6b with a little distance between the motor shaft and the centre of the baffle unit). Hereby a smaller opening of the outlet holes 12 for slurry occurs and thereby a smaller flow of slurry.

As shown at the bottom drawing of figure 8a, the circular area which the baffle unit moves across will be larger at the opposite direction of rotation (corresponding to the shown situation in figure 6a with a larger distance between the motor shaft and the centre of the baffle unit). Hereby a larger opening of the outlet holes 12 for slurry occurs and thereby a larger flow of slurry.

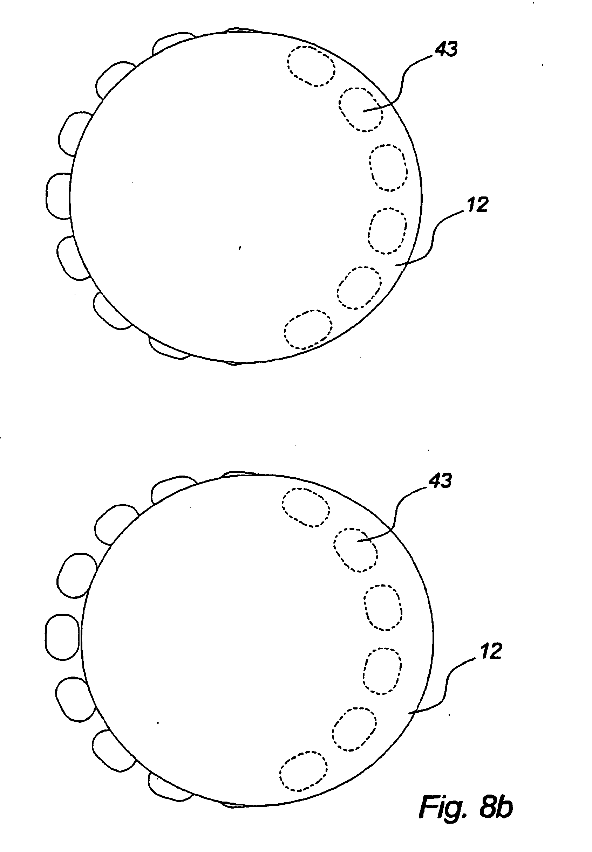

Fig. 8b shows the functionality for the distributor unit according to the invention with a second embodiment of the outlet holes.

The functionality of the two drawings corresponds to the functionality of fig. 8a but the outlet holes are oval-shaped in the shown example. The holes may of course have other suitable shapes.

The eccentric movements result in the outlet holes 10 alternately being opened fully or partly due to larger or smaller eccentric swinging-out movements for the baffle unit 31 and baffle ring 7. The outlet holes 10 are always closed fully by the larger or smaller eccentric swinging-out movements in order to dismantle straw or similar solid parts in the slurry.

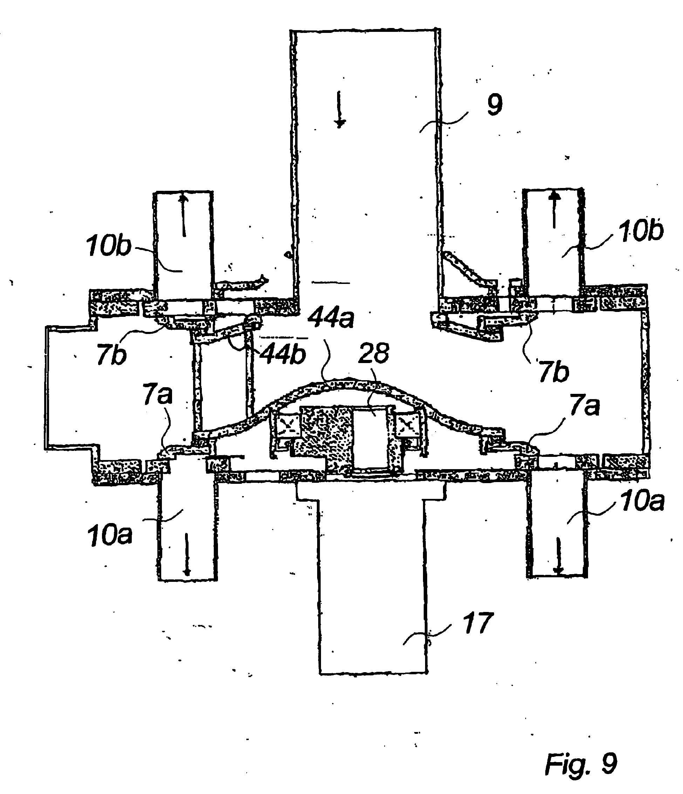

Fig. 9 shows a distributor unit in which the present invention may be incorporated. The distributor unit comprises more than one baffle ring e.g. for more sets of outlet holes.

Further, the distributor unit comprises a circular plate unit 44 connected through the eccentric and the eccentric unit (not shown on the figure) to the motor 17 and the motor shaft 28.

The circular plate unit 44 has a first and second plate part 44a, 44b which are connected to each other with ribs. Each plate part is connected to a first or a second baffle ring 7a, 7b for a first and second set of outlet holes 10a, 10b, respectively. In the present embodiment the flow of slurry is consequently controlled by two baffle rings before entering the outlet.

Hereby, it is achieved that the baffle rings 7a, 7b may perform a first eccentric movement or rotation by the first direction of rotation for the motor and a second eccentric movement with the opposite direction of rotation for the motor.

### Figure list

- 1.: Tractor
- 2.: Slurry spreader
- 3.: Two- part spreader boom
- 4.: Drag-pipes
- 5.: Distributor unit
- 6.: Filling point for slurry spreader
- 7.: Baffle ring
- 8.: Connection rib
- 9.: Inlet for slurry
- 10.: Outlet holes for slurry
- 11.: Plane underside for the distributor unit
- 12.: Baffle plate for the distributor unit
- 13.: Piston
- 14.: External edge of the piston
- 15.: Horizontal surface
- 16.: Plane upper side on the baffle ring
- 17.: Motor
- 18.: Vertical surface for the distributor unit
- 19.: Internal, vertical edge on the baffle ring
- 20.: Motor shaft groove
- 21.: O-ring
- 22.: Internal edge for the distributor unit
- 23.: Annular rib for the distributor unit
- 24.: Circular plate
- 25.: Outer edge for the distributor unit
- 26.: Circular cut-out in the circular plate
- 27.: Eccentric
- 27a, 27b.: Outer an inner part for the eccentric
- 28.: Motor shaft
- 29.: Eccentric unit
- 30.: Air holes
- 31.: Baffle unit
- 32.: Circle periphery
- 33a, 33b.: Two end-stops
- 34a, 34b.: Holes
- 35.: Protrusion
- 36.: Bearing
- 37.: Lining
- 38.: Groove for control pin
- 39.: Control pin
- 40.: Hole for control pin
- 41.: Eccentric
- 42.: O-ring
- 43.: Non-circular holes such as oval-shaped holes
- 44.: Circular plate or plates
- c.: Centre
- fp 1, fp2.: Connection points
- rr.: Direction of rotation for the motor
- X₁: Large eccentric movement
- Xₛ: Small eccentric movement
- X_{diff}: Difference in eccentric movements

## Claims

1. Distributor unit for distribution of liquid such as slurry from a container in a slurry spreader to several outlets, where said unit contains
a baffle plate (12) with outlet holes (10) for said liquid, where the outlet holes preferably are placed on a circle periphery (32),
at least one baffle unit (31) and at least one baffle ring (7) which lies up against said baffle plate (12), and
at least one motor (17) with a direct or indirect eccentric shaft connection (28) to said baffle ring (7), so that the baffle ring (7) can execute an eccentric movement in relation to said outlet holes (10),
**characterised in that**
the shaft connection (28) is connected to the baffle ring (7) via an eccentric (27) which is placed eccentrically in relation to the centre of the baffle unit (31), where said unit further contains means (33a, 33b, 34a, 34b, 35, 38, 39) for limiting the extent of movement for the eccentric (27), which means define the positions for a first and second connection point (fp1, fp2) by a change in the direction of rotation (rr) of said motor (17).

2. Distributor unit according to claim 1, **characterised in that** the means for limiting the extent of movement for the eccentric (27) comprise end-stops (33a, 33b) and at least one protrusion (35) on the eccentric, where the end-stops (33a, 33b) are placed on the baffle unit (31) or on the outer part of the eccentric in relation to the inner part of the eccentric or vice versa.

3. Distributor unit according to claim 2, **characterised in that** said end-stops (33a, 33b) are adjustable end-stops, e.g. two pins which can be inserted down into several openings (34a, 34b) arranged along the opening in the baffle ring (7) or on the outer part of the eccentric in relation to the inner part of the eccentric.

4. Distributor unit according to claim 2 or 3, **characterised in that** said end-stop is only an end-stop with a certain extent between two contact surfaces for the cut-out.

5. Distributor unit according to claim 3 or 4, **characterised in that** the openings (34a, 34b) for said adjustable end-stop (33a, 33b) are placed around the eccentric (27) within a circle of 180 degrees.

6. Distributor unit according to one or more of the claims 1-5 **characterised in that** the eccentric is placed double eccentrically in the distributor unit at different directions of rotations for the motor such as by the said first connection point (fp1) is displaced a distance R₁ in relation to the centre (c) of said circle periphery (32) at a first direction of rotation, and the second connection point (fp2) is displaced a distance R₂ at the opposite direction of rotation.

7. Method for changing the amount of a distributor unit's distribution of liquid such as slurry from a container in a slurry spreader to several outlets, where said method comprises,
eccentric movement of a baffle ring (7) over a baffle plate (12) with outlet holes (10) for said liquid, where the outlet holes preferably are placed on a circle periphery (32), **characterized in that** the method further comprises the steps of changing the direction of rotation of said motor (17) limiting the extent of movement for the eccentric (27) by end-stops (33a, 33b) and at least one protrusion (35) on the eccentric.

8. Method according to claim 7 where the extent of movement between said connection points (fp1, fp2) is limited by end-stops (33a, 33b) at a first direction of rotation and an opposite direction of rotation.

9. Method according to claim 7 or 8 where the eccentric is placed double eccentrically in the distributor unit and makes a first eccentric movement with the first direction of rotation and a first distance and a second eccentric movement with the opposite direction of rotation and a second distance.

## Patentansprüche

1. Verteilereinheit zur Verteilung einer Flüssigkeit wie Gülle aus einem Behälter in einem Güllestreuer zu verschiedenen Auslässen, wobei die Einheit beinhaltet:
eine Aufprallplatte (12) mit Auslassöffnungen (10) für die Flüssigkeit, wobei die Auslasslöcher vorzugsweise auf einem kreisförmigen Umfang (32) angeordnet sind;
wenigstens eine Aufpralleinheit (31) und wenigstens einen Aufprallring (7), der gegen die Aufprallplatten (12) aufliegt, und
wenigstens einen Motor (17) mit einer direkten oder indirekten exzentrischen Wellenverbindung (28) mit dem Aufprallring (7), so dass der Aufprallring (7) eine exzentrische Bewegung in Bezug auf die Auslasslöcher (10) ausführen kann,
**dadurch gekennzeichnet, dass**
dass die Wellenverbindung (28) mit dem Aufprallring (7) über einen Exzenter (27) verbunden ist, der exzentrisch in Bezug auf die Mitte der Aufpralleinheit (31) angeordnet ist, wobei besagte Verteilereinheit außerdem Mittel (33a, 33b, 34a, 34b, 35, 38, 39) umfasst, um das Ausmaß der Bewegung des Exzenters (27) zu begrenzen, wobei die Mittel die Positionen für einen ersten und einen zweiten Verbindungspunkt (fp1, fp2) definieren durch eine Änderung in der Richtung der Drehung (rr) des Motors (17).

2. Verteilereinheit nach Anspruch 1, **dadurch gekennzeichnet, dass** die Mittel, um das Ausmaß der Bewegung des Exzenters (27) zu begrenzen, Anschläge (33a, 33b) und wenigstens einen Vorsprung (35) auf dem Exzenter umfassen, wobei die Anschläge (33a, 33b) auf der Aufpralleinheit (31) oder auf dem äußeren Teil des Exzenters in Bezug auf den inneren Teil des Exzenters oder umgekehrt angeordnet sind.

3. Verteilereinheit nach Anspruch 2, **dadurch gekennzeichnet, dass** die Anschläge (33a, 33b) einstellbare Anschläge, beispielsweise zwei Stifte, sind, die in verschiedene Öffnungen (34a, 34b) eingesetzt werden können, die entlang der Öffnung in dem Aufprallring (7) oder dem äußeren Teil des Exzenters in Bezug auf den inneren Teil des Exzenters angeordnet sind.

4. Verteilereinheit nach Anspruch 2 oder 3, **dadurch gekennzeichnet, dass** der Anschlag nur in bestimmtem Ausmaß ein Anschlag zwischen zwei Kontaktflächen für die Ausnehmung ist.

5. Verteilereinheit nach Anspruch 3 oder 4, **dadurch gekennzeichnet, dass** die Öffnungen (34a, 34b) für den justierbaren Anschlag (33a, 33b) um den Exzenter (27) innerhalb eines Bereichs von 180° angeordnet ist.

6. Verteilereinheit nach einem oder mehreren der Ansprüche 1 - 5, **dadurch gekennzeichnet, dass** der Exzenter doppelexzentrisch in der Verteilereinheit bei unterschiedlichen Drehrichtungen für den Motor derart angeordnet ist, dass der erste Verbindungspunkt (fp1)) in einer ersten Drehrichtung mit einem Abstand R₁ in Bezug auf die Mitte (c) des kreisförmigen Umfangs (32 angeordnet ist und der zweite Verbindungspunkt (fp2) in der entgegengesetzten Drehrichtung mit einem Abstand R₂ angeordnet ist.

7. Verfahren zum Ändern der Menge der Verteilung einer Verteilereinheit einer Flüssigkeit wie Gülle von einem Behälter in einen Güllestreuer zu verschiedenen Auslässen, wobei das Verfahren aufweist:
eine exzentrische Bewegung eines Aufprallrings (7) über einer mit Auslasslöchern (10) für die Flüssigkeit versehenen Aufprallplatte (12), wobei die Auslasslöcher vorzugsweise auf einen kreisförmigen Umfang (32) angeordnet sind,
**dadurch gekennzeichnet, dass** das Verfahren weiter die folgenden Schritte aufweist:
Ändern der Drehrichtung des Motors (17),
Begrenzen des Ausmaßes der Bewegung für den Exzenter (27) durch Anschläge (33a, 33b) und wenigstens einen Vorsprung (35) auf dem Exzenter.

8. Verfahren nach Anspruch 7, wobei das Ausmaß der Bewegung zwischen den Verbindungspunkten (fp1, fp2) durch Anschläge (33a, 33b) bei wenigstens einer ersten Drehrichtung und einer dieser entgegengesetzten Drehrichtung begrenzt ist.

9. Verfahren nach Anspruch 7 oder 8, wobei der Exzenter doppelexzentrisch in der Verteilungseinheit angeordnet ist und eine erste exzentrische Bewegung in der ersten Drehrichtung und eine erste Strecke und eine zweite exzentrische Bewegung in der entgegengesetzten Drehrichtung und eine zweite Strecke macht.

## Revendications

1. Unité de distributeur pour la distribution d'un liquide tel que du lisier à partir d'un conteneur dans un épandeur de lisier à plusieurs sorties, ladite unité contenant
une plaque de déflecteur (12) avec des orifices de sortie (10) pour ledit liquide, où les orifices de sortie sont placés de préférence sur une périphérie circulaire (32),
au moins une unité de déflecteur (31) et au moins un anneau de déflecteur (7) qui repose contre ladite plaque de déflecteur (12), et
au moins un moteur (17) avec un raccord d'arbre excentrique direct ou indirect (28) audit anneau de déflecteur (7), de sorte que l'anneau de déflecteur (7) puisse exécuter un mouvement excentrique par rapport auxdits orifices de sortie (10),
**caractérisée en ce que** le raccord d'arbre (28) est relié à l'anneau de déflecteur (7) par un excentrique (27) qui est placé de manière excentrique par rapport au centre de l'unité de déflecteur (31), où ladite unité en outre contient des moyens (33a, 33b, 34a, 34b, 35, 38, 39) pour limiter l'étendue du mouvement de l'excentrique (27) lesdits moyens définissent les positions pour un premier et deuxième points de connexion (fp1, fp2) par un changement de la direction de rotation (rr) dudit moteur (17).

2. Unité de distributeur selon la revendication 1, **caractérisée en ce que** les moyens pour limiter l'étendue du mouvement de l'excentrique (27) comprise des butées d'arrêt (33a, 33b) et une protrusion (35) sur l'excentrique, où les butées d'arrêt (33a, 33b) sont placées sur l'unité de déflecteur (31) ou la partie extérieure de l'excentrique par rapport à la partie intérieure de l'excentrique ou vice versa.

3. Unité de distributeur selon la revendication 2, **caractérisée en ce que** lesdites butées d'arrêt (33a, 33b) sont des butées d'arrêt ajustables, par exemple deux broches qui peuvent être insérées dans plusieurs ouvertures (34a, 34b) agencées le long de l'ouverture dans l'anneau de déflecteur (7) ou sur la partie extérieure de l'excentrique par rapport à la partie intérieure de l'excentrique.

4. Unité de distributeur selon la revendication 2 ou 3, **caractérisée en ce que** ladite butée d'arrêt est seulement une butée d'arrêt avec une certaine étendue entre deux surfaces de contact pour l'arrêt.

5. Unité de distributeur selon la revendication 3 ou 4, **caractérisée en ce que** les ouvertures (34a, 34b) de ladite butée d'arrêt ajustable (33a, 33b) sont placées autour de l'excentrique (27) dans un cercle de 180°.

6. Unité de distributeur selon une ou plusieurs des revendications 1 à 5, **caractérisée en ce que** l'excentrique est placé de manière doublement excentrique dans l'unité de distributeur selon différentes directions de rotation du moteur de sorte que ledit premier point de connexion (fp1) est déplacé d'une distance R1 par rapport au centre (c) de ladite périphérie circulaire (32) selon une première direction de rotation, et le deuxième point de connexion (fp2) est déplacé d'une distance R2 selon la direction de rotation opposée.

7. Procédé pour changer la quantité de distribution d'une unité de distributeur de liquide tel que du lisier à partir d'un conteneur dans un épandeur de lisier à plusieurs sorties, où ledit procédé comprend ;
un mouvement excentrique d'un anneau de déflecteur (7) sur une plaque de déflecteur (12) avec des orifices de sortie (10) pour ledit liquide, où les orifices de sortie sont placés de préférence sur une périphérie circulaire (32),
**caractérisé en ce que** le procédé comprend en outre les étapes consistant à
changer la direction de rotation dudit moteur (17),
limiter l'étendue du mouvement de l'excentrique (27) par des butées d'arrêt (33a, 33b) et au moins une protrusion (35) sur l'excentrique.

8. Procédé selon la revendication 7, où l'étendue du mouvement entre lesdits points de connexion (fp1, fp2) est limitée par des butées d'arrêt (33a, 33b) selon une première direction de rotation et une direction de rotation opposée.

9. Procédé selon la revendication 7 ou 8, où l'excentrique est placé de manière doublement excentrique dans l'unité de distributeur et fait un premier mouvement excentrique avec la première direction de rotation et une première distance et un deuxième mouvement excentrique avec la direction de rotation opposée et une deuxième distance.
